# EUROPEAN PATENT SPECIFICATION

(11) **EP 1 101 376 B1**
(45) Date of publication and mention of the grant of the patent: **04.10.2006**
(21) Application number: 99941668.8
(22) Date of filing: 01.09.1999
(51) Int. Cl.: H04Q 7/32, H04L 9/00

(54) **SECURITY MODULE, SECURITY SYSTEM AND MOBILE STATION**
SICHERHEITSMODUL, SICHERHEITSSYSTEM UND MOBILSTATION
MODULE DE SECURITE, SYSTEME DE SECURITE ET STATION MOBILE

(30) Priority: 04.09.1998 FI 981902
(43) Date of publication of application: 23.05.2001
(73) Proprietor: VATANEN, Harri, Berkshire SL5 9PS (GB)
(72) Inventor: VATANEN, Harri, Surrey TW20 0NN (GB)
(74) Representative: Simmelvuo, Markku Kalevi
(86) International application number: PCT/FI1999/000713
(87) International publication number: WO 2000/014984

(56) References cited:
- WO-A-99/59360
- WO-A1-98/37661
- US-A- 5 742 756
- JAAP HAARTSEN: 'Bluetooth-The universal radio interface for ad hoc, wireless connectivity' ERICSSON REVIEW no. 3, 1998, pages 110 - 117, XP000783249

## Description

### FIELD OF THE INVENTION

The present invention relates to a security module. In particular, the invention concerns a new and improved security module and a security system for processing and transmitting various messages requiring a high degree of data security. The invention also concerns a mobile station utilizing the security module.

### BACKGROUND OF THE INVENTION

In mobile communication networks, e.g. GSM networks (GSM, Global System for Mobile communications), heavy encryption is used in conjunction with the transmission of speech over the radio link between the mobile station and the base station. Besides speech communication, communication using text or data messages has increased. With a rising service level, services relying on text or data communication have gained ground. Text communication can be utilized in various service functions, in paying for services, etc.

At present, a source of difficulties in encrypting messages is the fact that, in mobile telephones consistent with the current standard concerning mobile communication, it is not possible to make any changes to facilitate encryption because the user interfaces used in the telephones are manufacturer-specific. The only component that is sufficiently standardized and sufficiently open in respect of encryption is the subscriber identity module (SIM).

Mobile telephones consistent with a current mobile communication standard, such as the GSM standard, do not directly provide a possibility of encrypting text communication via mobile stations. Text communication can be used to implement services, such as bank services, which require a high level of data security. However, services requiring a high level of data security cannot become popular before sufficient encryption of message communication is possible.

A further problem with the use of a mobile communication network is that the message transmission services implemented in it are not necessarily real-time services and the transmission of messages may take time. This may be a problem e.g. when a user wants to pay for his/her shopping at the cash register of a store. In this situation, even a slight delay in message transmission will significantly retard the execution of the payment transaction. At present, no part of the mobile communication standard supports local communication between a mobile station and a cash register terminal.

A group of the world's leading enterprises in telecommunication and information technology has developed a technology that makes it possible to establish a wireless connection between a mobile telephone and e.g. a portable computer. This technology is designated as "Bluetooth^{™}" and it is based on short-range radio technology, which can be used to interconnect many types of terminals. A more detailed description of this technology can be found e.g. on the WWW page www.bluetooth.com.

The Bluetooth^{™} technology enables devices to be interconnected via a short-range radio link. By using the Bluetooth^{™} technology, it is possible to establish a connection e.g. between a mobile station and a portable computer without cumbersome cabling. Printers, work stations, telefax devices, keyboards and virtually any digital apparatus may be parts of a Bluetooth^{™} system or network. The technology forms a universal bridge to existing data networks and peripherals and provides means for forming small private groups via interconnected devices without a fixed network infrastructure. In addition, encryption and authentication can be used in the communication between the devices, e.g. so that only a given user's mobile telephone may be used in connection with a given portable computer.

Previously known is also a smart card that enables reliable personal authentication and genuine signature. Its sphere of application is unlimited. Examples of possible applications are a national electronic identity card (EID), encryption of files, telecommunication and electronic mail, a means for signing documents, an electronic currency, driver's license, ballot, and so on.

Although the smart card can be used in the ways described above, the problem remains that the smart card still requires a separate reading device for communicating with the smart card. Moreover, the smart card alone is incapable of communicating over any telecommunication network, which means that updating information e.g. using short messages is impossible.

In addition, even if it were possible to connect a mobile station locally to a cash register terminal using Bluetooth^{™} technology and thus utilize the mobile station as a payment instrument, there is still the problem of encrypted and secure data communication needed for payment transactions.

WO 995930 discloses an arrangement for communication of subscriber identity module related data in a wireless communication system. WO 9837661 discloses a method and system for authenticating an authorized user of a remote terminal attempting to interconnect with a computer network over a wireless modem. US 5,742,756 discloses a user security system for use in conjunction with an operator terminal. Jaap Haartsen: "Bluetooth - The universal radio interface for ad hoc wireless connectivity", Ericsson review no. 3, 1998, pages 110-117, XP000783249 discusses Bluetooth^{™} technology in general.

In prior art, no general-purpose security module is known which could be connected to different cash register and automated systems, mobile stations or other portable devices and which would be able to safely communicate e.g. with a host device on the one hand and a service provider's device on the other hand utilizing e.g. the Bluetooth^{™} technology using encryption so as to meet the high data security requirements imposed by banks and authorities.

The object of the present invention is to eliminate the problems referred to above.

A specific object of the invention is to disclose a new type of general-purpose security module which can be used in many kinds of application environments for establishing an encrypted and secure local connection. A further object of the invention is to disclose a security system which provides means for encrypted data communication between user and service provider.

A further object of the invention is to disclose a new type of mobile station which can be used for local communication with a service provider's terminal at a high level of data security. Using this solution together with the security module, it is possible to implement a general-purpose security apparatus which can be connected and used in any environment.

An additional object of the invention is to disclose a device the manufacturer of which can be directly certified as a so-called reliable third party. This obviates the need to have an encryption property separately added by a reliable third party to a device manufactured by a given manufacturer, such as a mobile telephone manufacturer.

### BRIEF DESCRIPTION OF THE INVENTION

The present invention concerns a security module comprising connection means for connecting the security module to a terminal, such as a mobile station, cash register terminal, on-line banking terminal, portable computer, telephone or any corresponding terminal. The security module is intended to be a general-purpose module to be connected to telecommunication networks and telecommunication terminals which will make it possible to implement the required encryption operations for the implementation of applications requiring a high level of data security.

According to the invention, the security module comprises encryption means for encrypting electronic data transfer effected via the security module, for decrypting encrypted data and for implementing an electronic signature, wherein the encrypting means comprises a processor for encrypting and decrypting electronic data and for implementing the electronic signature, and a memory connected to the processor for storing of encryption keys and parameters; a first connection interface for effecting a wireless electronic data transfer communication between the security module and an external device, the external device being other than the terminal device; and an interface for exchanging electrical operating power between the security module and the terminal device.

The wireless connection interface can be implemented using e.g. Bluetooth^{™} technology, which is a technology known in itself and the standardization of which has not yet been completed. Anyway, we shall not describe it here as it is previously known.

In addition, the security module may comprise smart card component configured for implementing smart card functions via the security module. The smart card component may use the connection interface for communication with external devices, such as cash register terminals, on-line banking terminals and equivalent to use and download electronic money. Thus, the invention makes the use of a smart card easier and more attractive to the client and the user.

In one embodiment of the invention, the terminal device comprises a mobile station powered by a releasable attachable station power source configured for mating engagement with the mobile station, the security module further comprising a frame configured for the mating engagement with the mobile station in place of the station power source and a module power source, and a connector attached to the frame for effecting an electrical connection between the module power source and the mobile station when the module power source is disposed in mating engagement with the mobile station for supplying operating power to the mobile station from the power source. In this case, the security module is connected to the mobile station in order to supply power to it and to implement communication by means of the mobile station. The security module can now be operated using the keypad of the mobile station.

The invention also concerns a security system for a service provider terminal device and a service user terminal device electrically interconnected via a predetermined communication link. The security system comprises a first security module connected to the service provider terminal device and a second security module connected to the service user terminal device. The first and second security modules are configured for processing information transmitted between the service provider terminal device and the service user terminal device. Each of the first and second security modules comprises connection means for connecting the security module to its associated terminal device; encryption means for encrypting electronic data transfer effected via the security module, for decrypting encrypted data and for implementing an electronic signature, wherein the encrypting means comprises a processor for encrypting and decrypting electronic data and for implementing the electronic signature, and a memory connected to the processor for storing of encryption keys and parameters; a first connection interface for effecting a wireless electronic data transfer communication between the security module and an external device, the external device being the other terminal device; and an interface for exchanging electrical operating power between the security module and the terminal device. In the system, the terminals are electrically interconnected via a predetermined communication link, e.g. using the Bluetooth^{™} technology

The security system may also comprise a service provider's server electrically connected to the service provider's terminal. This connection can be established via a telecommunication network, such as a GSM network or some other suitable network. The first security module can be further connected via the telecommunication network to the service provider's terminal to update functions executed via the service user's terminal and to save them to the server. This refers to so-called clearing functions used to transfer electronic money paid for services or shopping by the service user to the service provider's account.

The invention also concerns a mobile station, which here means a terminal known in itself, comprising a keypad, a display, a radio unit and a power source. A preferred example of this kind of mobile station is a GSM-compatible terminal or GSM mobile telephone (GSM, Global Standard for Mobile Communication).

According to the invention, the mobile station comprises a security module integrated with the power source and comprising encryption means for encrypting electronic data transfer effected via the security module, for decrypting encrypted data and for implementing an electronic signature, wherein the encrypting means comprises a processor for encrypting and decrypting electronic data and for implementing the electronic signature, and a memory connected to the processor for storing of encryption keys and parameters; and a first connection interface for effecting a wireless electronic data transfer communication between the security module and one of an external device and the mobile station. The security module is preferably arranged to process information transmitted by the mobile station over a telecommunication network and/or via a local communication interface of the mobile station. The security module may communicate with the mobile station and/or external terminal by using Bluetooth^{™} technology.

As compared with prior art, the present invention has the advantage that existing mobile telephones currently used need not necessarily be modified in any way in order to use them for secure communication. A further advantage of the invention is that the security module is a general-purpose device, which can be connected to almost any terminal in which encrypted data transfer is needed.

In addition, the invention makes it possible to implement secure systems, which can be used by service providers to provide services requiring a high level of data security, such as on-line banking services.

### LIST OF ILLUSTRATIONS

In the following, the invention will be described by the aid of preferred examples of its embodiments with reference to the attached drawing, in which
Fig. 1 presents a security module according to the present invention,
Fig. 2 presents a preferred security system according to the present invention; and
Fig. 3 presents a preferred mobile station according to the present invention comprising an integrated security module as provided by the invention.

### DETAILED DESCRIPTION OF THE INVENTION

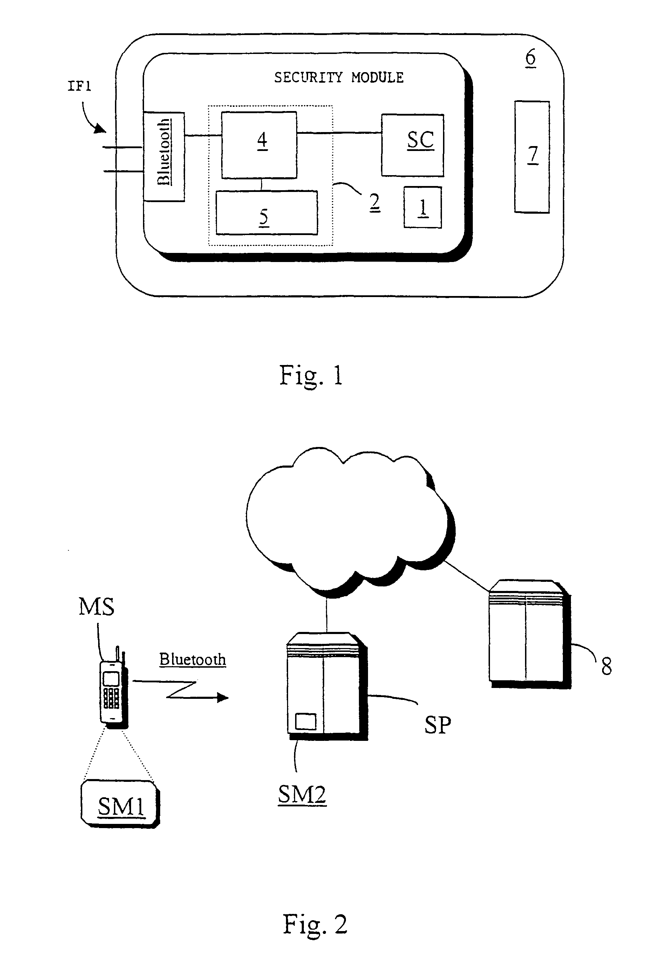

The security module presented in Fig. 1 comprises connection means 1 for connecting the security module to a terminal SP, MS. The terminal may be a mobile station, a cash register terminal, an on-line banking terminal or any corresponding device used to implement applications requiring a high level of data security. Moreover, the security module comprises encryption means 2 for encrypting electronic data transfer in the security module, decrypting encrypted information and generating an electronic signature when required.

To implement a local network interface or equivalent, the security module further comprises a first connection interface IF1 allowing the security module to be connected to an external terminal e.g. via a radio link for electronic data transfer. In conjunction with the connection interface it is possible to provide a so-called Bluetooth^{™} component, as presented in Fig. 1, for implementing the actions required by the technology in question. The security module is also provided with a power source, which may be a chargeable accumulator, a mains transformer or equivalent, for supplying power to the security module components that need electric power.

The encryption means presented in Fig. 1 further comprise a processor 4, which can be designed and optimized especially for encryption functions and which encrypts and decrypts and implements an electronic signature, and a memory 5 connected to the processor for the storage of the keys and parameters needed by the processor. The personal key security module user, parameters of the encryption algorithm used and other data needed can be stored in the memory. A preferred example of the encryption algorithm is the RSA method, but other unsymmetrical algorithms may also be used, depending on the application.

Furthermore, the security module comprises a smart card component SC for implementing smart card functions by means of the security module. The smart card component can utilize the other components of the security module, e.g. the interface IF1 for telecommunication connections.

The processor 4 or the smart card component SC of the security module further comprises a clock for synchronizing and clocking the functions of the security module. The clock is synchronized with the clock of the device to which the security module is connected. Another possibility is that the clock is synchronized with the clock of the Bluetooth^{™} system.

The frame 6 of the security module has been fitted to conform to the shapes of the power source of a mobile station. In addition, the frame 6 is provided with a connector 7 for connecting the security module to a mobile station. The power and data communication between the security module and the mobile station can be connected via the connector 7. In this embodiment, the power source of the security module substantially corresponds to the power source of the mobile station in respect of capacity and is therefore also chargeable. The security module can be easily connected to the mobile station both mechanically and electrically.

Fig. 2 presents an example of the security system of the invention. The security system presented in Fig. 2 comprises a service provider's terminal SP, in this example an on-line banking terminal, and a service user's terminal MS, in this example a GSM mobile telephone, which are electrically connected to each other via a preselected communication link. In this example, the communication link is established using Bluetooth^{™} technology.

The security system presented in Fig. 2 additionally comprises a first security module SM1 connected to the service provider's terminal and a second security module SM2 connected to the service user's terminal, these security modules being arranged to process information transmitted via a telecommunication link between the terminals. Appropriate keys and other parameters are placed in the memories of the security modules SM1 and SM2. Public keys can be loaded beforehand e.g. from special public key servers reserved for this purpose.

In addition, the security system presented in Fig. 2 comprises a service provider's server 8. The first security module is connected to the service provider's server 8 via a telecommunication network, in this example a telephone network. Thus, functions executed by the service user's terminal can be updated and saved to the server. On the other hand, the service provider's terminal SP and server 8 may be physically the same thing.

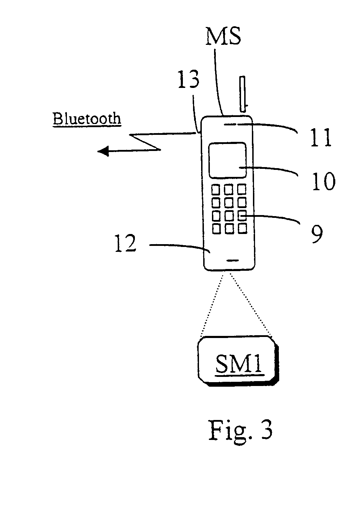

Fig. 3 is a diagrammatic representation of a preferred mobile station according to the invention. The mobile station in Fig. 3 comprises a keypad 9, a display 10, a radio unit 11 and a power source 12 and naturally other necessary components that are not mentioned here. Integrated with the power source 12 is a security module SM, which comprises, as above, encryption means 2 for encrypting electronic data transfer effected via the security module, decrypting encrypted information and generating an electronic signature when required, a first connection interface IF1 for connecting the security module to a mobile station MS and/or and external device SP to allow electronic data transfer.

The security module SM is preferably arranged to process information transmitted by means of the mobile station via a telecommunication network and/or a local interface 13 of the mobile station. Thus, the security module is also able to utilize the data transmission properties of the mobile station e.g. in such manner that the security module first establishes a connection to the mobile station e.g. using Bluetooth^{™} technology and further to the service provider's terminal SP, using the same technology.

Referring to Fig. 2, a preferred embodiment of the use of the security system, security module and mobile station will now be described. The user wants to load money from his bank account to his electric cash device, i.e. mobile station. The user starts the mobile station e.g. in bank mode, whereupon the security module is activated and beings contacting other devices supporting the Bluetooth^{™} technology in the environment. This can be implemented in the manner described in the Bluetooth^{™} descriptions. Once the security module SM1 connected to the user's mobile station MS and its cash card or smart card component SC detect an on-line banking terminal SP, they initialize a secure connection with the banking terminal by sending their own public key and receiving the bank's public key. Thus, the user's security module SM1 and the on-line banking terminal's security module SM2 are able to use encryption when exchanging messages. Using the keypad 9 and display 10 of the mobile station MS, the user gives the amount of money to be loaded, and this information is sent in an encrypted form to the banking terminal SP. After this, the banking terminal asks the user to give his electronic signature, which the user gives via his security module SM1.

After the on-line banking terminal SP has approved the cash load operation, it sends the specified sum to the user's smart card SC via the security modules SM1 and SM2 and updates the bank server 8 with this transaction. Although not described here, it is obvious that, with appropriate modifications, the above-described function can be applied in various service and vending operations.

The invention is not restricted to the examples of its embodiments described above, but many variations are possible within the scope of the claims.

## Claims

1. Security module comprising connection means (1) for connecting the security module to a terminal device (SP), **characterized in that** the security module comprises:
encryption means (2) for encrypting electronic data transfer effected via the security module for decrypting encrypted data and for implementing an electronic signature, wherein the encryption means comprises a processor (4) for encrypting and decrypting electronic data and for implementing the electronic signature, and a memory (5) connected to the processor for storing of encryption keys and parameters;
a first connection interface (IF1) for effecting a wireless electronic data transfer communication between the security module and an external device, the external device being other than the terminal device; and
an interface for exchanging electrical operating power between the security module and the terminal device.

2. Security module as defined in claim 1, **characterized in that** the security module comprises a smart card component (SC) configured for implementing smart card functions via the security module.

3. Security module as defined in any one of the preceding claims 1 - 2, **characterized in that** the first connection interface is configured for implementing a short-range wireless data transfer communications connection.

4. Security module as defined in any one of the preceding claims 1- 3, wherein the terminal device (SP) comprises a mobile station powered by a releasable attachable station power source configured for mating engagement with the mobile station, the security module further comprising a frame configured for the mating engagement with the mobile station in place of the station power source and a module power source, and a connector (7) attached to the frame for effecting an electrical connection between the module power source and the mobile station when the module power source is disposed in mating engagement with the mobile station for supplying operating power to the mobile station from the power source.

5. Security system for a service provider terminal device (SP) and a service user terminal device (MS) electrically interconnected via a predetermined communication link, **characterized in that** the security system comprises:
a first security module (SM1) connected to the service provider terminal device, and
a second security module (SM2) connected to the service user terminal device,
said first and second security modules being configured for processing information transmitted between the service provider terminal device and the service user terminal device; and each of the first and second security modules comprising:
connection means (1) for connecting the security module to its associated terminal device;
encryption means (2) for encrypting electronic data transfer effected via the security module, for decrypting encrypted data and for implementing an electronic signature, wherein the encryption means comprises a processor (4) for encrypting and decrypting electronic data and for implementing the electronic signature, and a memory (5) connected to the processor for storing of encryption keys and parameters;
a first connection interface (IF1) for effecting a wireless electronic data transfer communication between the security module and an external device, the external device being the other terminal device; and
an interface for exchanging electrical operating power between the security module and its associated terminal device.

6. Security system as defined in claim 5, **characterized in that** the service provider terminal device (SP1) comprises one of an on-line banking terminal, a cash register, and a vending machine.

7. Security system as defined in claim 5 or 6, **characterized in that** the service user terminal device (SP2) comprises one of a mobile station and a portable computer.

8. Security system as defined in any one of the preceding claims 5 - 7, **characterized in that** the security system comprises a service provider server (8); and that the first security module is connected via a telecommunication network to the service provider server (8) for updating the functions executed by the service user terminal device and saving them to the server.

9. A mobile station comprising a keypad (9), a display (10), a radio unit (11) and a power source (12), **characterized in that** the mobile station comprises a security module (SM) integrated with the power source and comprising:
encryption means (2) for encrypting electronic data transfer effected via the security module, for decrypting encrypted data and for implementing an electronic signature, wherein the encryption means comprises a processor for encrypting and decrypting electronic data and for implementing the electronic signature, and a memory connected to the processor for storing of encryption keys and parameters; and
a first connection interface (IF1) for effecting a wireless electronic data transfer communication between the security module and one of an external device and the mobile station.

10. Mobile station as defined in claim 9, **characterized in that** the security module (SM) has been configured for processing information transmitted with at least one of the mobile station via a telecommunication network and a local interface (13) of the mobile station.

11. Mobile station as defined in claim 9 or 10, **characterized in that** the security module (SM) has been configured for effecting the wireless electronic data transfer communication using a short-range wireless data transfer communication connection technology.

## Patentansprüche

1. Sicherheitsmodul, welches eine Anschlussvorrichtung (1) aufweist, zum Anschließen des Sicherheitsmoduls an eine Endgerätevorrichtung (SP), **dadurch gekennzeichnet, dass** das Sicherheitsmodul aufweist:
eine Verschlüsselungsvorrichtung (2) zum Verschlüsseln elektronischer Datenübertragung, welche durch das Sicherheitsmodul bewirkt wird, zum Entschlüsseln verschlüsselter Daten und zum Implementieren einer elektronischen Unterschrift, wobei die Verschlüsselungsvorrichtung aufweist:
einen Prozessor (4) zum Verschlüssen und Entschlüssen elektronischer Daten und zum Implementieren der elektronischen Unterschrift und einen Speicher (5), welcher an den Prozessor zum Speichern der Verschlüsselungsschlüssel und Parameter angeschlossen ist;
ein erstes Anschluss-Interface (IF1) zum Bewirken einer elektronischen Funkdaten-Übertragungskommunikation zwischen dem Sicherheitsmodul und einer externen Vorrichtung, wobei die externe Vorrichtung eine andere als die Endgerätevorrichtung ist; und
ein Interface zum Austauschen elektrischer Betriebsenergieversorgung zwischen dem Sicherheitsmodul und der Endgerätevorrichtung.

2. Sicherheitsmodul nach Anspruch 1, **dadurch gekennzeichnet, dass** das Sicherheitsmodul eine Smartkartenkomponente bzw. -bauteil(SC) aufweist, welche zum Implementieren von Smartkartenfunktionen über das Sicherheitsmodul konfiguriert ist.

3. Sicherheitsmodul nach einem der vorausgehenden Ansprüche 1-2, **dadurch gekennzeichnet, dass** das erste Anschluss-Interface konfiguriert ist, um einen Kurzbereichsfunkdaten-Übertragungskommunikationsanschluss zu implementieren.

4. Sicherheitsmodul nach einem der vorausgehenden Ansprüche 1-3, wobei die Endgerätevorrichtung (SP) ein Mobiltelefon aufweist, welches durch eine auslösbare, befestigbare Versorgungsspannungsstation versorgt wird, um die Verbindung mit dem Eingriff des Mobiltelefons herzustellen, wobei das Sicherheitsmodul ferner aufweist: einen Rahmen, welcher zur Verbindung mit dem Eingriff des Mobiltelefons am Ort der Stationsleistungsquelle und einer Modulleistungsquelle konfiguriert ist, und ein Verbindungslied (7), welches an dem Rahmen befestigt ist, um eine elektrische Verbindung zwischen der Modulspannungsquelle und dem Mobiltelefon zu bewirken, wenn die Modulspannungsquelle für das Anschließen des Eingriffs mit dem Mobiltelefon vorgesehen ist, um Betriebsenergieversorgung für das Mobiltelefon von der Stromversorgungsquelle zu liefern.

5. Sicherheitssystem für eine Endgerätevorrichtung (SP) eines Service-Providers und eine Endgerätevorrichtung (MS) eines Service-Nutzers, welche elektrisch über einen vorher festgelegten Kommunikations-Link bzw. -Verbindung elektrisch miteinander verbunden sind, **dadurch gekennzeichnet, dass** das Sicherheitssystem aufweist:
ein erstes Sicherheitsmodul (SM1), welches an der Endgerätevorrichtung des Service-Providers angeschlossen ist, und ein zweites Sicherheitsmodul (SM2), welches an der Endgerätevorrichtung des Service-Nutzers angeschlossen ist, wobei das erste und das zweite Sicherheitsmodul so konfiguriert sind, dass sie Information, welche zwischen der Endgerätevorrichtung des Service-Providers und der Endgerätevorrichtung des Service-Nutzers übertragen wird, verarbeitet; und wobei das erste und das zweite Sicherheitsmodul aufweisen:
eine Anschlussvorrichtung (1) zum Anschließen des Sicherheitsmoduls an seine mit ihm verbundene Endgerätevorrichtung;
eine Verschlüsselungsvorrichtung (2), um elektronische Datenübertragung, welche durch das Sicherheitsmodul bewirkt wird, zu entschlüsseln, um verschlüsselte Daten zu entschlüsseln, und um eine elektronische Unterschrift zu implementieren, wobei die Verschlüsselungsvorrichtung aufweist: einen Prozessor (4) zum Verschlüsseln und Entschlüsseln elektronischer Daten und zum Implementieren der elektronischen Unterschrift und einen Speicher (5), welcher an dem Prozessor angeschlossen ist, um die Verschlüsselungsschlüssel und Parameter zu speichern;
ein erstes Anschluss-Interface (IF1), um eine elektronische Datenübertragungskommunikation zwischen dem Sicherheitsmodul und einer externen Vorrichtung zu bewirken, wobei die externe Vorrichtung die andere Endgerätevorrichtung ist; und
ein Interface, um elektrische Betriebsleistung zwischen dem Sicherheitsmodul und seiner mit ihm verbundenen Endgerätevorrichtung auszutauschen.

6. Sicherheitssystem nach Anspruch 5, **dadurch gekennzeichnet, dass** die Endgerätevorrichtung des Service-Providers (SP1) eines der folgenden Geräte aufweist: eine Online-Bankendgerätevorrichtung, eine Registrierkasse und einen Verkaufsautomaten.

7. Sicherheitssystem nach Anspruch 5 oder 6, **dadurch gekennzeichnet, dass** das Endgerät (SP2) des Service-Nutzers entweder ein Mobiltelefon oder einen tragbaren Rechner aufweist.

8. Sicherheitssystem nach einem der vorausgehenden Ansprüche 5-7, **dadurch gekennzeichnet, dass** das Sicherheitssystem einen Server (8) des Service-Providers aufweist; und dass das erste Sicherheitsmodul über ein Telekommunikationsnetzwerk an den Server (8) des Service-Providers angeschlossen ist, um die Funktionen, welche durch die Endgerätevorrichtung des Service-Nutzers ausgeführt werden, zu aktualisieren und sie auf dem Server zu speichern.

9. Mobiltelefon, welches ein Tastenfeld (9), eine Anzeige (10), eine Radioeinheit (11) und eine Stromversorgungsquelle (12) aufweist, **dadurch gekennzeichnet, dass** das Mobiltelefon ein Sicherheitsmodul (SM) aufweist, welches mit der Stromversorgungsquelle integriert ist und welches aufweist:
eine Verschlüsselungseinrichtung (2) zum Verschlüsseln elektronischer Datenübertragung, welche durch das Sicherheitsmodul bewirkt wird, um verschlüsselte Daten zu entschlüsseln und um eine elektronische Unterschrift zu implementieren, wobei die Verschlüsselungsvorrichtung aufweist: einen Prozessor zum Verschlüsseln und Entschlüsseln elektronischer Daten und zum Implementieren der elektronischen Unterschrift und einen Speicher, welcher an den Prozessor angeschlossen ist, um die Verschlüsselungsschlüssel und Parameter zu speichern; und
ein erstes Anschluss-Interface (IF1), um eine elektronische Funkdaten-Übertragungskommunikation zwischen dem Sicherheitsmodul und entweder einer der externen Vorrichtungen oder dem Mobiltelefon zu bewirken.

10. Mobiltelefon nach Anspruch 9, **dadurch gekennzeichnet, dass** das Sicherheitsmodul (SM) konfiguriert wurde, um Information, welche wenigstens entweder mit dem Mobiltelefon über ein Telekommunikationsnetzwerk oder mit einem lokalen Interface (13) des Mobiltelefons übertragen wird, zu verarbeiten.

11. Mobiltelefon nach Anspruch 9 oder 10, **dadurch gekennzeichnet, dass** das Sicherheitsmodul (SM) so konfiguriert wurde, dass es die elektronische Funkdaten-Übertragungskommunikation bewirkt, indem eine Kurzbereichsfunkdaten-Übertragungskommunikations-Verbindungstechnologie benutzt wird.

## Revendications

1. Module de sécurité comprenant des moyens de connexion (1) pour connecter le module de sécurité à un dispositif terminal (SP), **caractérisé en ce que** le module de sécurité comprend :
des moyens de chiffrement (2) pour chiffrer le transfert de données électroniques effectué par l'intermédiaire du module de sécurité, pour déchiffrer des données chiffrées et pour mettre en oeuvre une signature électronique, dans lequel les moyens de chiffrement comprennent un processeur (4) pour chiffrer et déchiffrer des données électroniques et pour mettre en oeuvre la signature électronique, et une mémoire (5) connectée au processeur pour le stockage de clés et de paramètres de chiffrement ;
une première interface de connexion (IF1) pour effectuer une communication de transfert de données électroniques sans fil entre le module de sécurité et un dispositif externe, le dispositif externe étant autre que le dispositif terminal ; et
une interface pour échanger une puissance de fonctionnement électrique entre le module de sécurité et le dispositif terminal.

2. Module de sécurité selon la revendication 1, **caractérisé en ce que** le module de sécurité comprend un composant de carte à puce intelligente (SC) configuré pour mettre en oeuvre des fonctions de carte à puce intelligente par l'intermédiaire du module de sécurité.

3. Module de sécurité selon l'une quelconque des revendications précédentes 1 à 2, **caractérisé en ce que** la première interface de connexion est configurée pour mettre en oeuvre une connexion de communications de transfert de données sans fil à courte portée.

4. Module de sécurité selon l'une quelconque des revendications précédentes 1 à 3, dans lequel le dispositif terminal (SP) comprend une station mobile alimentée par une source d'alimentation de station attachable amovible configurée pour s'engager par accouplement avec la station mobile, le module de sécurité comprenant en outre un cadre configuré pour l'engagement par accouplement avec la station mobile à la place de la source d'alimentation de station et une source d'alimentation de module, et un connecteur (7) fixé au cadre pour effectuer une connexion électrique entre la source d'alimentation de module et la station mobile lorsque la source d'alimentation de module est disposée en engagement par accouplement avec la station mobile pour fournir une puissance de fonctionnement à la station mobile depuis la source d'alimentation.

5. Système de sécurité pour un dispositif terminal de fournisseur de service (SP) et un dispositif terminal d'utilisateur de service (MS) électriquement interconnectés par l'intermédiaire d'une liaison de communication prédéterminée, **caractérisé en ce que** le système de sécurité comprend :
un premier module de sécurité (SM1) connecté au dispositif terminal de fournisseur de service, et
un second module de sécurité (SM2) connecté au dispositif terminal d'utilisateur de service,
lesdits premier et second modules de sécurité étant configurés pour traiter des informations transmises entre le dispositif terminal de fournisseur de service et le dispositif terminal d'utilisateur de service ; et chacun des premier et second modules de sécurité comprenant :
des moyens de connexion (1) pour connecter le module de sécurité à son dispositif terminal associé ;
des moyens de chiffrement (2) pour chiffrer le transfert de données électroniques effectué par l'intermédiaire du module de sécurité, pour déchiffrer des données chiffrées et pour mettre en oeuvre une signature électronique, dans lequel les moyens de chiffrement comprennent un processeur (4) pour chiffrer et déchiffrer des données électroniques et pour mettre en oeuvre la signature électronique, et une mémoire (5) connectée au processeur pour le stockage de clés et de paramètres de chiffrement ;
une première interface de connexion (IF1) pour effectuer une communication de transfert de données électroniques sans fil entre le module de sécurité et un dispositif externe, le dispositif externe étant l'autre dispositif terminal ; et
une interface pour échanger une puissance de fonctionnement électrique entre le module de sécurité et son dispositif terminal associé.

6. Système de sécurité selon la revendication 5, **caractérisé en ce que** le dispositif terminal de fournisseur de service (SP1) comprend l'un parmi un terminal bancaire en ligne, une caisse enregistreuse, et un distributeur automatique.

7. Système de sécurité selon la revendication 5 ou 6, **caractérisé en ce que** le dispositif terminal d'utilisateur de service (SP2) comprend l'un parmi une station mobile et un ordinateur portable.

8. Système de sécurité selon l'une quelconque des revendications précédentes 5 à 7, **caractérisé en ce que** le système de sécurité comprend un serveur de fournisseur de service (8) ; et que le premier module de sécurité est connecté par l'intermédiaire d'un réseau de télécommunication au serveur de fournisseur de service (8) pour mettre à jour les fonctions exécutées par le dispositif terminal d'utilisateur de service et enregistrer celles-ci sur le serveur.

9. Station mobile comprenant un clavier (9), un affichage (10), une unité de radiocommunication (11) et une source d'alimentation (12), **caractérisée en ce que** la station mobile comprend un module de sécurité (SM) intégré avec la source d'alimentation et comprenant :
des moyens de chiffrement (2) pour chiffrer le transfert de données électroniques effectué par l'intermédiaire du module de sécurité, pour déchiffrer des données chiffrées et pour mettre en oeuvre une signature électronique, dans lequel les moyens de chiffrement comprennent un processeur pour chiffrer et déchiffrer des données électroniques et pour mettre en oeuvre la signature électronique, et une mémoire connectée au processeur pour le stockage de clés et de paramètres de chiffrement ;
une première interface de connexion (IF1) pour effectuer une communication de transfert de données électroniques sans fil entre le module de sécurité et l'un parmi un dispositif externe et la station mobile.

10. Station mobile selon la revendication 9, **caractérisée en ce que** le module de sécurité (SM) a été configuré pour traiter des informations transmises avec au moins l'une parmi la station mobile par l'intermédiaire d'un réseau de télécommunication et une interface locale (13) de la station mobile.

11. Station mobile selon la revendication 9 ou 10, **caractérisée en ce que** le module de sécurité (SM) a été configuré pour effectuer la communication de transfert de données électroniques sans fil en utilisant une technologie de connexion de communication de transfert de données sans fil à courte portée.
